(19) **Europäisches Patentamt / European Patent Office / Office européen des brevets**

(11) **EP 4 576 530 A1**

(12) # DEMANDE DE BREVET EUROPEEN

(43) Date de publication:
**25.06.2025 Bulletin 2025/26**

(21) Numéro de dépôt: **24221230.6**

(22) Date de dépôt: **18.12.2024**

(51) Classification Internationale des Brevets (IPC):
**H02M 1/00** (2006.01)  **H02M 3/00** (2006.01)
**H02M 3/335** (2006.01)

(52) Classification Coopérative des Brevets (CPC):
**H02M 3/33573; H02M 3/01;** H02M 1/0025

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **19.12.2023 FR 2314513**

(71) Demandeur: **Commissariat à l'Energie Atomique et aux Energies Alternatives
75015 Paris (FR)**

(72) Inventeurs:
 • **DE ARAUJO PEREIRA, Lucas Henrique**
   **38054 GRENOBLE CEDEX 9 (FR)**
 • **DESPESSE, Ghislain**
   **38054 GRENOBLE CEDEX 9 (FR)**
 • **MOREL, Adrien**
   **38054 GRENOBLE CEDEX 9 (FR)**
 • **PILLONNET, Gaël**
   **38054 GRENOBLE CEDEX 9 (FR)**

(74) Mandataire: **Lavoix
2, place d'Estienne d'Orves
75441 Paris Cedex 09 (FR)**

(54) **DISPOSITIF ÉLECTRONIQUE ET PROCÉDÉ DE PILOTAGE, AVEC RÉGULATION OPTIMISÉE, D'UN CONVERTISSEUR D'ÉNERGIE ÉLECTRIQUE COMPORTANT UN RÉSONATEUR, SYSTÈME DE CONVERSION D'ÉNERGIE ÉLECTRIQUE ASSOCIÉ**

(57) Ce dispositif (20) de pilotage d'un convertisseur incluant un résonateur et plusieurs interrupteurs (14), comprend :
- une chaine (42) de mesure d'une grandeur de régulation ;
- une chaine (44) de commande d'une commutation des interrupteurs (14), pour alterner des phases à tension sensiblement constante et à charge sensiblement constante aux bornes du résonateur, la chaine de commande (44) comportant une boucle de régulation d'un instant de commutation d'un interrupteur ;
- un module de synchronisation (40) pour envoyer simultanément un ordre de mesure à la chaine de mesure (42) et un ordre de commande à la chaine de commande (44), la durée de mise en oeuvre de l'ordre de mesure par la chaine de mesure (42) étant inférieure à celle de mise en oeuvre de l'ordre de commande par la chaine de commande (44), de sorte que la grandeur de régulation est mesurée avant la commutation de l'interrupteur.

FIG.3

EP 4 576 530 A1

**Description**

La présente invention concerne un dispositif électronique de pilotage d'un convertisseur d'énergie électrique apte à convertir une tension d'entrée en une tension de sortie, le convertisseur comportant deux bornes d'entrée pour recevoir la tension d'entrée, deux bornes de sortie pour délivrer la tension de sortie, un résonateur, et plusieurs interrupteurs connectés au résonateur.

L'invention concerne également un système de conversion d'énergie électrique comprenant un tel convertisseur et un tel dispositif électronique de pilotage du convertisseur.

L'invention concerne aussi un procédé de pilotage d'un tel convertisseur.

On connaît un dispositif électronique de pilotage comprenant une chaine de mesure configurée pour mesurer une grandeur de régulation du convertisseur ; une chaine de commande configurée pour commander une commutation de chacun des interrupteurs, pour alterner des phases à tension sensiblement constante aux bornes du résonateur et des phases à charge sensiblement constante aux bornes dudit résonateur, la chaine de commande comportant une boucle de régulation configurée pour réguler, à partir de la grandeur de régulation mesurée, un instant de commutation d'un interrupteur respectif.

En effet, des stratégies de contrôle, c'est-à-dire de pilotage, de convertisseurs continu-continu ou DC-DC (de l'anglais *Direct Current- Direct Current*) avec résonateur piézoélectrique à six phases au cours d'un cycle de résonance, avec alternance de phases à tension sensiblement constante aux bornes du résonateur et de phases à charge sensiblement constante aux bornes dudit résonateur. Cependant, ces stratégies utilisent un contrôle numérique, par exemple basé sur un composant, ou circuit, logique programmable, tel qu'un FPGA (de l'anglais *Field Programmable Gate Array),* ce qui présente certaines limitations.

La fréquence de fonctionnement maximale des convertisseurs contrôlés est limitée par la fréquence et la précision d'échantillonnage du contrôleur, c'est-à-dire du dispositif de pilotage utilisé ou la vitesse de comparaison dans le cas d'utilisation d'un comparateur pour, par exemple, détecter le passage par zéro d'un courant ou par zéro de la dérivée de la tension et actionner directement des interrupteurs, ainsi que cela est décrit dans les articles suivants :

- J. J. Piel, J. D. Boles, J. H. Lang and D. J. Perreault, "Feedback Control for a Piezoelectric-Resonator-Based DC-DC Power Converter" 2021 IEEE 22nd Workshop on Control and Modelling of Power Electronics (COMPEL) ;
- B. Pollet, G. Despesse and F. Costa, "A New Non-isolated Low-Power Inductorless Piezoelectric DC-DC Converter" in IEEE Transactions on Power Electronics, vol. 34, no. 11 ; et
- M. Touhami, G. Despesse, F. Costa and B. Pollet, "Implementation of Control Strategy for Step-down DC-DC Converter Based on Piezoelectric Resonator" 2020 22nd European Conférence on Power Electronics and Applications (EPE'20 ECCE Europe).

La commande directe des interrupteurs via la chaine de commande à partir de la sortie d'un comparateur fonctionne jusqu'à quelques 100 kHz, mais n'est plus possible à une fréquence de 10 MHz en raison de délais internes à la chaine de commande, le délai depuis l'envoi d'un ordre de commande via la sortie du comparateur jusqu'à la commutation effective de l'interrupteur correspondant étant alors souvent plus long que la durée typique de la phase concernée

L'article de E. A. Stolt, W. D. Braun and J. M. Rivas-Davila, "Forward-Zero Cycle Closed-Loop Control of Piezoelectric Resonator DC-DC Converters" 2022 IEEE 23rd Workshop on Control and Modeling for Power Electronics (COMPEL), décrit une régulation en mode abaisseur de tension, en maintenant un fonctionnement à fréquence fixe avec des angles de commande sensiblement constants, mais en court-circuitant le résonateur périodiquement pendant un cycle complet de résonance pour ajuster la puissance de sortie du convertisseur (mode rafale, de l'anglais *burst mode).* Par exemple, en supprimant un cycle de résonance sur cinq, la puissance de sortie ne voit plus de puissance une période de résonance sur cinq et l'énergie apportée au résonateur est aussi réduite, limitant l'amplitude du courant dans le résonateur et donc la puissance transmise sur les quatre autres périodes. Outre la stabilité de la régulation qui n'est pas évidente, cela conduit à un courant dans le résonateur piézoélectrique supérieur au courant strictement nécessaire lorsque la puissance demandée est faible devant la puissance maximale.

Le but de l'invention est alors de proposer un dispositif électronique de pilotage, et un procédé de pilotage associé, permettant un pilotage amélioré du convertisseur d'énergie électrique, notamment pour une fréquence de fonctionnement supérieure à 1 Mhz, et typiquement de l'ordre de 10 MHz.

A cet effet, l'invention a pour objet un dispositif électronique de pilotage d'un convertisseur d'énergie électrique apte à convertir une tension d'entrée en une tension de sortie, le convertisseur comportant deux bornes d'entrée pour recevoir la tension d'entrée, deux bornes de sortie pour délivrer la tension de sortie, un résonateur, et plusieurs interrupteurs connectés au résonateur,

le dispositif électronique de pilotage comprenant :

- une chaine de mesure configurée pour mesurer une grandeur de régulation du convertisseur ;
- une chaine de commande configurée pour commander une commutation de chacun des interrupteurs, pour alterner des phases à tension sensiblement constante aux bornes du résonateur et des phases à charge sensiblement constante aux bornes dudit résonateur,

la chaine de commande comportant une boucle de régulation configurée pour réguler, à partir de la grandeur de régulation mesurée, un instant de commutation d'un interrupteur respectif ;

- un module de synchronisation configuré pour envoyer simultanément un ordre de mesure de la grandeur de régulation à la chaine de mesure et un ordre de commande de l'interrupteur respectif à la chaine de commande, et

la durée de mise en oeuvre de l'ordre de mesure par la chaine de mesure est inférieure à la durée de mise en oeuvre de l'ordre de commande par la chaine de commande, de sorte que la grandeur de régulation est mesurée avant la commutation de l'interrupteur respectif.

La mesure de la grandeur de régulation immédiatement avant, c'est-à-dire juste avant, la commutation effective de l'interrupteur respectif permet alors de minimiser une erreur dans la boucle de régulation. La grandeur de régulation est avantageusement représentative de la tension aux bornes du résonateur, et le fait de mesurer la grandeur de régulation juste avant la commutation de l'interrupteur respectif permet alors de minimiser l'erreur entre la tension mesurée et la tension constante souhaitée de la phase suivante.

Cela permet alors d'obtenir une représentation à basse fréquence de l'erreur de commutation à haute fréquence, ce qui facilite la régulation du système de conversion à une fréquence plus basse, indépendamment de la vitesse de fonctionnement du convertisseur.

Suivant d'autres aspects avantageux de l'invention, le dispositif électronique de pilotage comprend une ou plusieurs des caractéristiques suivantes, prises isolément ou suivant toutes les combinaisons techniquement possibles :

- l'interrupteur respectif est choisi parmi le groupe comportant :

  + l'un des interrupteurs, dit premier interrupteur, connecté entre l'une des bornes d'entrée et le résonateur, le premier interrupteur étant commutable entre une position ouverte et une position fermée dans laquelle la tension d'entrée est appliquée aux bornes du résonateur;
  + l'un des interrupteurs, dit deuxième interrupteur, connecté entre l'une des bornes d'entrée et le résonateur, le deuxième interrupteur étant commutable entre une position ouverte et une position fermée dans laquelle la tension est nulle aux bornes du résonateur ;
  + l'un des interrupteurs, dit troisième interrupteur, connecté entre l'une des bornes de sortie et le résonateur, le troisième interrupteur étant commutable entre une position ouverte et une position fermée dans laquelle une énergie du résonateur est restituée à la tension de sortie ;

- la grandeur de régulation est choisie parmi le groupe consistant en : la tension aux bornes du résonateur ; la tension entre l'une des bornes du résonateur et un potentiel de référence, telle qu'une masse électrique ; la tension aux bornes dudit interrupteur respectif ; et la tension entre l'une des bornes dudit interrupteur respectif et un potentiel de référence, telle qu'une masse électrique ;
- la chaine de mesure comprend deux sondes de mesure adaptées pour mesurer les deux potentiels d'extrémité de la tension formant la grandeur de régulation, chaque sonde de mesure étant adaptée pour mesurer un potentiel respectif en une extrémité respective de ladite tension ;

la tension formant la grandeur de régulation étant de préférence ensuite obtenue par différence entre les deux potentiels d'extrémité mesurés respectivement par les deux sondes de mesure ;

- la chaine de mesure comprend un module d'échantillonnage connecté aux deux sondes de mesure ; le module d'échantillonnage comportant un premier étage connecté aux deux sondes de mesure, un deuxième étage connecté en sortie du premier étage et une unité différentielle connectée en sortie du deuxième étage ; le premier étage étant configuré pour générer une première impulsion d'échantillonnage, et le deuxième étage étant configuré pour générer une deuxième impulsion d'échantillonnage après la première impulsion d'échantillonnage ; la deuxième impulsion d'échantillonnage ayant une durée plus longue que la première impulsion d'échantillonnage ;

un ratio entre la durée de la deuxième impulsion d'échantillonnage et celle de la première impulsion d'échantillonnage

3

étant de préférence supérieur à 10, de préférence encore supérieur à 15, et préférentiellement encore sensiblement égal à 20 ;

le premier étage incluant de préférence encore une paire de premiers condensateurs d'échantillonnage et une paire de premiers commutateurs, chaque premier commutateur étant connecté entre une sonde de mesure et un premier condensateur respectifs et configuré, lorsqu'il est commuté en position fermée, pour autoriser la charge du premier condensateur respectif ;

le deuxième étage incluant de préférence encore une paire de deuxièmes condensateurs d'échantillonnage et une paire de deuxièmes commutateurs, chaque deuxième commutateur étant connecté à un deuxième condensateur respectif et configuré, lorsqu'il est commuté en position fermée, pour autoriser la charge du deuxième condensateur respectif ;

- lorsque le convertisseur fonctionne à une fréquence de fonctionnement supérieure à 1 MHz, la grandeur de régulation est mesurée entre 0,5 ns et 20 ns, avantageusement sensiblement 1 ns, avant la commutation de l'interrupteur respectif ;
- le résonateur est un résonateur piézoélectrique ;

le résonateur piézoélectrique étant de préférence constitué selon l'une des constitutions parmi le groupe consistant en : un unique élément piézoélectrique ; plusieurs éléments piézoélectriques connectés en série ; plusieurs éléments piézoélectriques connectés en parallèle ; un élément piézoélectrique et un condensateur auxiliaire connectés en série ; un élément piézoélectrique et un condensateur auxiliaire connectés en parallèle ; et un agencement de plusieurs branches parallèles, chaque branche comportant un ou plusieurs éléments piézoélectriques connectés en série ou un condensateur auxiliaire ;

le condensateur auxiliaire étant de préférence encore de capacité supérieure, de préférence encore au moins trois fois supérieure, à une capacité de référence du ou des éléments piézoélectriques, chaque élément piézoélectrique étant modélisé sous forme d'un condensateur et d'une branche résonante connectée en parallèle du condensateur, la capacité de référence étant la capacité dudit condensateur ;

- le résonateur est un résonateur LC comportant une inductance et un condensateur connecté en série de l'inductance ;
- l'envoi simultané d'un ordre de mesure de la grandeur de régulation à la chaine de mesure et d'un ordre de commande de l'interrupteur respectif à la chaine de commande est effectué pour plusieurs commandes d'interrupteur au cours d'un même cycle de résonance du résonateur ; la durée de mise en oeuvre de l'ordre de mesure par la chaine de mesure étant inférieure à la durée de mise en oeuvre de l'ordre de commande par la chaine de commande, de sorte que la grandeur de régulation est mesurée avant la commutation de l'interrupteur respectif, pour ces plusieurs commandes d'interrupteur au cours du même cycle de résonance ;

ces plusieurs commandes d'interrupteur au cours du même cycle de résonance étant de préférence des fermetures d'interrupteur formant des débuts de phases à tension sensiblement constante aux bornes du résonateur ;

- le dispositif de pilotage comprend plusieurs ensembles de pilotage, et le nombre d'ensembles de pilotage est égal au nombre d'interrupteurs dont la commutation est pilotée par le dispositif de pilotage, chaque ensemble de pilotage comportant un module de synchronisation, une chaîne de mesure et une chaîne de commande respectifs.

L'invention concerne également un système de conversion d'énergie électrique comprenant :

- un convertisseur d'énergie électrique apte à convertir une tension d'entrée en une tension de sortie, le convertisseur comportant deux bornes d'entrée pour recevoir la tension d'entrée, deux bornes de sortie pour délivrer la tension de sortie, un résonateur, et plusieurs interrupteurs connectés au résonateur ; et
- un dispositif électronique de pilotage du convertisseur d'énergie électrique ; le dispositif électronique de pilotage étant tel que défini ci-dessus.

L'invention concerne aussi un procédé de pilotage d'un convertisseur d'énergie électrique apte à convertir une tension d'entrée en une tension de sortie, le convertisseur comportant deux bornes d'entrée pour recevoir la tension d'entrée, deux bornes de sortie pour délivrer la tension de sortie, un résonateur, et plusieurs interrupteurs connectés au résonateur,

le procédé étant mis en oeuvre par un dispositif électronique de pilotage et comprenant les étapes suivantes :

- mesure, via une chaine de mesure, d'une grandeur de régulation du convertisseur ;
- commande, via une chaine de commande, d'une commutation de chacun des interrupteurs, pour alterner des phases à tension sensiblement constante aux bornes du résonateur et des phases à charge sensiblement constante aux bornes dudit résonateur,

la chaine de commande comportant une boucle de régulation configurée pour réguler, à partir de la grandeur de régulation mesurée, un instant de commutation d'un interrupteur respectif ;
le procédé comprenant, avant les étapes de mesure et de commande :

- synchronisation comportant l'envoi simultané d'un ordre de mesure de la grandeur de régulation à la chaine de mesure et d'un ordre de commande de l'interrupteur respectif à la chaine de commande, et

la durée de mise en oeuvre de l'ordre de mesure par la chaine de mesure est inférieure à la durée de mise en oeuvre de l'ordre de commande par la chaine de commande, de sorte que la grandeur de régulation est mesurée avant la commutation de l'interrupteur respectif.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

- la figure 1 est une représentation schématique d'un système électronique de conversion d'énergie électrique selon l'invention, comprenant un convertisseur d'énergie électrique comportant un résonateur et plusieurs interrupteurs connectés au résonateur; et un dispositif électronique de pilotage du convertisseur d'énergie électrique, le résonateur étant un résonateur piézoélectrique ;
- la figure 2 est une représentation schématique du convertisseur d'énergie électrique lorsque le résonateur est un résonateur LC ;
- la figure 3 est une représentation schématique du dispositif de pilotage de la figure 1, celui-ci comportant une chaine de mesure d'une grandeur de régulation du convertisseur et une chaine de commande d'une commutation de chacun des interrupteurs ;
- la figure 4 est une vue détaillée d'un module d'échantillonnage inclus dans la chaine de mesure de la figure 3 ;
- la figure 5 est un organigramme d'un procédé, selon l'invention, de pilotage d'un convertisseur d'énergie électrique, le procédé étant mis en oeuvre par le dispositif de pilotage de la figure 1 ;
- la figure 6 représente des courbes de la tension et de l'intensité aux bornes du résonateur piézoélectrique de la figure 1, en mode élévateur de tension, et respectivement en mode abaisseur de tension, du convertisseur d'énergie électrique ; et
- la figure 7 représente une courbe de la tension aux bornes du résonateur piézoélectrique, une courbe d'un ordre de fermeture d'un des interrupteurs du convertisseur d'énergie électrique, une courbe d'un ordre d'échantillonnage de la tension aux bornes du résonateur et une courbe de la tension échantillonnée.

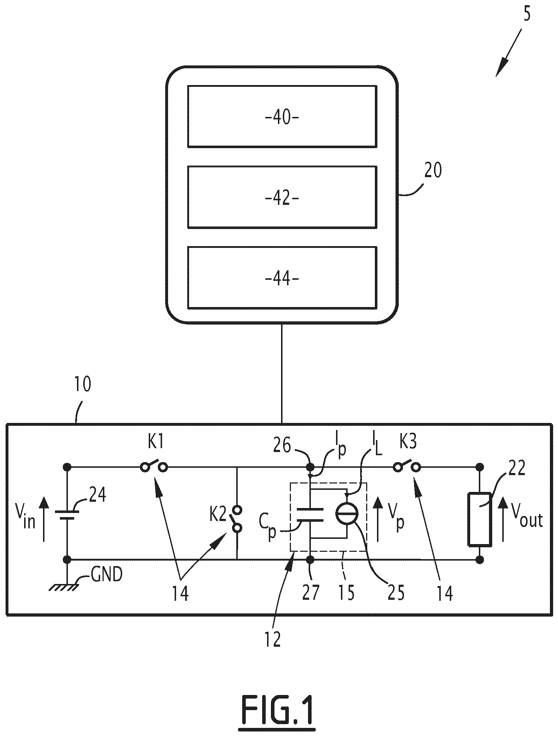

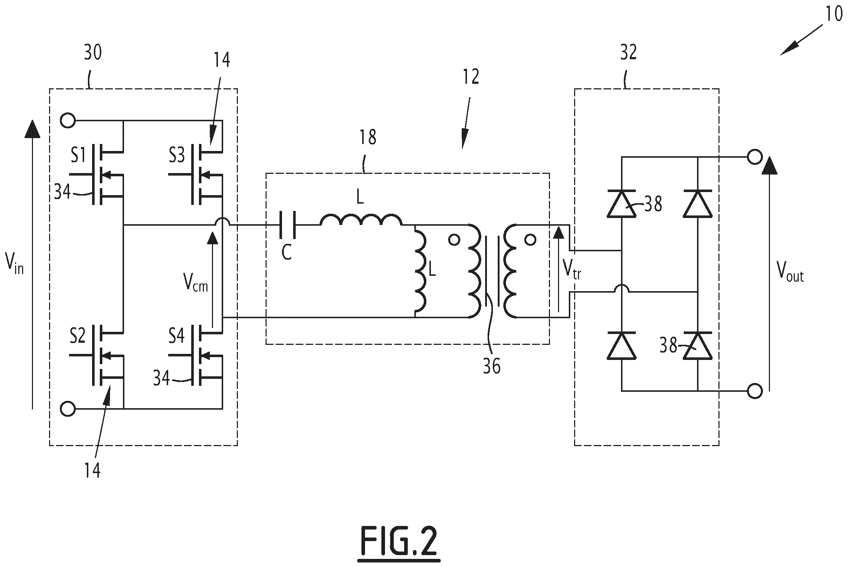

Sur la figure 1, un système électronique de conversion d'énergie électrique 5 comprend un convertisseur d'énergie électrique 10 comportant un résonateur 12 et plusieurs interrupteurs 14 connectés au résonateur 12. Dans l'exemple de la figure 1, le résonateur 12 est un résonateur piézoélectrique 15, les interrupteurs 14 sont notés K1, K2, K3. Dans l'exemple de la figure 2, le résonateur 12 est un résonateur LLC 18, les interrupteurs 14 sont notés S1, S2, S3, S4. En variante non représentée, le résonateur 12 est un résonateur LC de type VHF, et le convertisseur 10 forme alors un convertisseur à résonance LC de type VHF, tel que par exemple décrit dans la thèse de Vincent Massavie intitulée « *Convertisseur VHF intégrant des composants passifs innovants* », publiée en 2023 sur la plateforme HAL.
Le système de conversion 5 comprend également un dispositif électronique 20 de pilotage du convertisseur d'énergie électrique 10.
Le système électronique de conversion d'énergie électrique 5 est typiquement un système de conversion en une énergie électrique continue, tel qu'un système de conversion continu-continu apte à convertir une première énergie électrique continue reçue en entrée en une deuxième énergie électrique continue délivrée en sortie, ou encore un système de conversion alternatif-continu apte à convertir une énergie électrique alternative reçue en entrée en une énergie électrique continue délivrée en sortie du système de conversion 5. L'énergie électrique est typiquement une tension, ou en variante un courant ou une puissance.
Lorsque le système de conversion d'énergie électrique 5 est un système de conversion alternatif-continu, le système de conversion d'énergie électrique 5 comprend de préférence en outre un redresseur de tension, non représenté, connecté en entrée du convertisseur d'énergie électrique 10 et apte à redresser la tension électrique alternative reçue en entrée du système de conversion 5 pour délivrer une tension électrique redressée en entrée du convertisseur 10, le convertisseur d'énergie électrique 10 étant de préférence un convertisseur continu-continu apte à convertir une énergie électrique continue en une autre énergie électrique continue. Le redresseur de tension est par exemple un pont redresseur, tel qu'un pont de diodes. En variante, le redresseur de tension est formé en tout ou partie par des interrupteurs du convertisseur 10, par exemple via des interrupteurs bidirectionnels en tension.

L'homme du métier observera que ces différents exemples pour le système conversion 5, qu'il s'agisse d'un système de conversion continu-continu ou bien d'un système de conversion alternatif-continu, sont également présentés dans les documents FR 3 086 471 A1 et FR 3 086 472 A1, notamment en regard de leurs figures 1 à 3,10,15,17 et 19 à 20.

Le convertisseur d'énergie électrique 10 est de préférence un convertisseur continu-continu, et est également appelé convertisseur DC-DC. Le convertisseur continu-continu a généralement pour rôle de réguler une tension d'alimentation $V_{out}$ d'une charge 22 à une valeur stable, en étant alimenté par une source d'énergie 24 fournissant une tension sensiblement continue Vin. La source d'énergie 24 est par exemple une batterie ou un panneau solaire.

Le convertisseur d'énergie électrique 10 est alors configuré pour élever la valeur de la tension continue entre son entrée et sa sortie, et est alors également appelé convertisseur continu-continu élévateur, ou encore convertisseur continu-continu fortement élévateur ; ou bien est configuré pour abaisser la valeur de la tension continue entre son entrée et sa sortie, et est alors appelé convertisseur continu-continu abaisseur, avec également une variante de convertisseur continu-continu fortement abaisseur.

Lorsque le convertisseur d'énergie électrique 10 est un convertisseur continu-continu abaisseur, la valeur de la tension d'entrée correspond typiquement à la tension $V_{in}$ de la source d'énergie 24, et la valeur de la tension de sortie correspond à la tension $V_{out}$ aux bornes de la charge 22, la tension Vin étant alors supérieure à la tension $V_{out}$.

Lorsque le convertisseur d'énergie électrique 10 est un convertisseur continu-continu élévateur, la valeur de la tension d'entrée correspond aussi typiquement à la tension Vin de la source d'énergie 24, et la valeur de la tension de sortie correspond à la tension $V_{out}$ aux bornes de la charge 22, la tension $V_{in}$ étant alors inférieure à la tension $V_{out}$.

Lorsque le convertisseur d'énergie électrique 10 est un convertisseur continu-continu fortement abaisseur, la valeur de la tension d'entrée correspond par exemple à la différence de tension $(V_{in}-V_{out})$, et la valeur de la tension de sortie correspond par exemple à la tension $V_{out}$, la différence de tension $(V_{in}-V_{out})$ étant nettement supérieure à la tension $V_{out}$.

Lorsque le convertisseur d'énergie électrique 10 est un convertisseur continu-continu abaisseur, selon une variante d'abaisseur, la valeur de la tension d'entrée correspond par exemple à la différence de tension $(V_{in}-V_{out})$, et la valeur de la tension de sortie correspond à la tension $V_{out}$ aux bornes de la charge 22, la différence de tension $(V_{in}-V_{out})$ étant supérieure à la tension $V_{out}$.

Le convertisseur 10 comporte plusieurs interrupteurs 14 aptes à être commandés pour alterner des phases à tension sensiblement constante et des phases à charge sensiblement constante aux bornes du résonateur 12. Cette alternance de phases à tension sensiblement constante et de phases à charge sensiblement constante est typiquement effectuée à l'intérieur de périodes de durée sensiblement constante correspondant à la fréquence de fonctionnement du convertisseur 10, dépendant d'une fréquence d'oscillation, également appelée fréquence propre ou encore fréquence de vibration, du résonateur 12. Les phases à charge sensiblement constante permettent, en régime établi ou permanent, de passer d'une tension constante à une autre et de fermer les interrupteurs qui doivent l'être lorsque la tension à leurs bornes est de préférence nulle afin d'avoir une commutation dite à zéro de tension, également appelée commutation ZVS (de l'anglais *Zéro Voltage Switching).*

Chaque interrupteur 14 comprend par exemple un transistor et une diode antiparallèle (non représentés) intrinsèque au transistor.

Le transistor est, par exemple, un transistor à effet de champ à grille isolée, également appelé MOSFET (de l'anglais *Metal Oxide Semiconductor Field Effect Transistor).* En variante, le transistor est un transistor bipolaire ; un transistor bipolaire à grille isolée, également appelé IGBT (de l'anglais *Insulated Gate Bipolar Transistor)* ; un transistor à base de silicium (Si), un transistor à base de GaN (de l'anglais *Gallium Nitride) ;* un transistor à base de carbure de silicium (SiC), ou un transistor à base de diamant, ou encore un thyristor, ou encore un switch mécanique, tel qu'un micro-switch MEMS (de l'anglais *MicroElectroMechanical System).*

Par charge sensiblement constante, on entend un échange d'une charge avec l'extérieur qui est inférieur à 30% de la charge qui aurait été échangée avec l'extérieur si la tension avait été maintenue constante. Autrement dit, par charge sensiblement constante, on entend une variation de charge inférieure à 30% de la charge qui aurait été échangée avec l'extérieur du résonateur 12 si la tension aux bornes du résonateur 12 avait été maintenue constante sur la durée temporelle considérée.

Par circuit électrique sensiblement ouvert, on entend un circuit dont un éventuel courant de fuite conduit à une variation de charge du résonateur 12 inférieure à 30% de la charge qui aurait été échangée avec l'extérieur du résonateur 12 si la tension aux bornes du résonateur 12 avait été maintenue constante sur la durée temporelle considérée.

Par tension sensiblement constante, on entend une variation de tension inférieure à 20%, de préférence inférieure à 10%, de la tension d'entrée ou de sortie du convertisseur 10. À titre d'exemple, si la tension d'entrée du convertisseur 10 est égale à 100V, alors la variation de tension lors de chaque phase à tension sensiblement constante, c'est-à-dire sur chaque palier à tension sensiblement constante, est inférieure à 20% de cette tension, c'est-à-dire inférieure à 20V ; de préférence inférieure à 10 % de cette tension, c'est-à-dire inférieure à 10V.

Dans l'exemple de la figure 1, le dispositif de pilotage 20 est configuré pour faire fonctionner le matériau piézoélectrique du résonateur piézoélectrique 15 à sa résonance afin d'exploiter des phases de transfert de charge permettant de s'affranchir de l'utilisation d'un élément inductif, tout en régulant la tension de sortie en conservant la résonance du matériau piézoélectrique, c'est-à-dire avec des cycles de commutation répétés à une fréquence de fonctionnement dépendant de la fréquence d'oscillation du résonateur piézoélectrique 15, et en ajustant les durées de phases de commutation respectives à l'intérieur du cycle de résonance.

Comme connu en soi, l'oscillation mécanique du résonateur piézoélectrique 15 est approximativement sinusoïdale. Une augmentation ou une diminution de l'énergie stockée sur une période conduit respectivement à une augmentation ou à une diminution de l'amplitude d'oscillation. Par ailleurs, lors d'une phase à charge sensiblement constante aux bornes du résonateur piézoélectrique 15, c'est-à-dire lorsque le résonateur piézoélectrique 15 est placé dans un circuit électrique sensiblement ouvert, avec un faible échange de charges électriques entre le résonateur piézoélectrique 15 et l'extérieur, une augmentation de l'amplitude des oscillations engendre une augmentation de la vitesse de variation de la tension $V_p$ aux bornes du résonateur piézoélectrique 15, et lors d'une phase à tension sensiblement constante aux bornes du résonateur piézoélectrique 15, cette augmentation d'amplitude d'oscillation conduit à une augmentation du courant échangé entre le résonateur piézoélectrique 15 et l'extérieur.

Dans l'exemple de la figure 1, un premier interrupteur K1 est connecté entre l'une des bornes d'entrée et le résonateur piézoélectrique 15, le premier interrupteur K1 étant commutable entre une position ouverte et une position fermée dans laquelle la tension d'entrée Vin est appliquée aux bornes du résonateur piézoélectrique 15.

Un deuxième interrupteur K2 est connecté aux bornes du résonateur piézoélectrique 15, le deuxième interrupteur K2 étant commutable entre une position ouverte et une position fermée dans laquelle la tension est nulle aux bornes du résonateur piézoélectrique 15.

Un troisième interrupteur K3 est connecté entre l'une des bornes de sortie et le résonateur piézoélectrique 15, le troisième interrupteur K3 étant commutable entre une position ouverte et une position fermée dans laquelle une énergie du résonateur piézoélectrique 15 est restituée à la tension de sortie $V_{out}$.

La fréquence d'oscillation est la fréquence à laquelle oscille le résonateur 12, tel que le résonateur piézoélectrique 15 et par conséquent son courant $I_L$ sur sa branche motionnelle (branche R-L-C) de son modèle équivalent autour du mode de résonance sélectionné. Le courant $I_L$ peut être déduit soit en observant l'évolution de la tension $V_p$ lorsque le résonateur est isolé ou soit en observant son courant de sortie $I_p$ lors des phases à tension constante. Le cycle de conversion est synchronisé sur un mouvement mécanique du résonateur piézoélectrique 15, et la fréquence du pilotage est alors calée sur la fréquence d'oscillation mécanique. En pratique, cette fréquence d'oscillation dépend du point de fonctionnement du convertisseur 10 : valeurs des trois paliers de tension et du courant de sortie. En fonction du point de fonctionnement, cette fréquence d'oscillation évolue typiquement entre la fréquence de résonance dite série du piézoélectrique ($\omega s = 1/\sqrt{(LC)}$ où L et C correspondent aux inductance et capacité d'une branche résonante 25 décrite ci-après) et la fréquence de résonance dite parallèle du piézoélectrique ($\omega p = 1/\sqrt{(L*C*Cp/(C+Cp))}$), également respectivement appelés fréquence de résonance et fréquence d'antirésonance du résonateur piézoélectrique 15. La fréquence de fonctionnement du convertisseur 10 est alors comprise entre ces deux fréquences de résonance et d'antirésonance du résonateur piézoélectrique 15. Le point de fonctionnement varie lentement au regard de la fréquence d'oscillation du résonateur piézoélectrique 15. Le point de fonctionnement évolue typiquement à moins de 10kHz, alors que la fréquence d'oscillation du résonateur piézoélectrique 15 est typiquement supérieure ou égale à 100kHz. De ce fait, la fréquence de fonctionnement du convertisseur 10 évolue peu d'une période à la suivante.

De manière générale, le nombre total de phases à tension sensiblement constante au cours d'un cycle de résonance est supérieur ou égal à un dans un mode de fonctionnement nominal du convertisseur 10.

Dans l'exemple de la figure 1 où le résonateur 12 est le résonateur piézoélectrique 15, ce nombre total de phases à tension sensiblement constante est égal à trois en mode de fonctionnement nominal du convertisseur 10. De manière générale, lorsque le résonateur 12 est le résonateur piézoélectrique 15, le nombre total de phases à tension sensiblement constante au cours d'un cycle de résonance est typiquement supérieur ou égal à trois.

Dans l'exemple de la figure 2 où le résonateur 12 est le résonateur LLC 18, le nombre total de phases à tension sensiblement constante est égal à deux en mode de fonctionnement nominal du convertisseur 10. De manière générale, lorsque le résonateur 12 est le résonateur LLC 18, le nombre total de phases à tension sensiblement constante au cours d'un cycle de résonance est typiquement supérieur ou égal à deux. Les deux phases à tension sensiblement constante correspondent typiquement à $+V_{in}$ et $-V_{in}$ ; ou encore $+V_{in}/2$ et $-V_{in}/2$, où $V_{in}$ représente la tension d'entrée du convertisseur 10.

Lorsqu'on variante non représentée, le résonateur 12 est le résonateur LC de type VHF, il y a typiquement une seule phase à tension sensiblement constante en mode de fonctionnement nominal du convertisseur 10, et le convertisseur 10 comporte alors typiquement un seul interrupteur 14.

Le résonateur piézoélectrique 15 est connu en soi, et est typiquement modélisé, proche du mode de résonance exploité, sous la forme d'un condensateur Cp et de la branche résonante 25 connectée en parallèle du condensateur Cp, le condensateur Cp et la branche résonante 25 étant connectés entre des première 26 et deuxième 27 électrodes du résonateur piézoélectrique 15. Les première 26 et deuxième 27 électrodes forment les bornes du résonateur piézoélectrique 15.

Dans l'exemple de la figure 1, le résonateur piézoélectrique 15 comporte un unique élément piézoélectrique.

En variante non représentée, le résonateur piézoélectrique 15 comporte plusieurs éléments piézoélectriques connectés en série. En variante, le résonateur piézoélectrique 15 comporte plusieurs éléments piézoélectriques connectés en parallèle. En variante, le résonateur piézoélectrique 15 comporte un élément piézoélectrique et un condensateur auxiliaire connectés en série. En variante, le résonateur piézoélectrique 15 comporte un élément piézoélectrique et un condensateur auxiliaire connectés en parallèle. En variante encore, le résonateur piézoélectrique 15 comporte un agencement de plusieurs branches parallèles, chaque branche comportant un ou plusieurs éléments piézoélectriques connectés en série ou un condensateur auxiliaire.

Selon les variantes concernées, le condensateur auxiliaire est avantageusement de capacité supérieure, de préférence encore au moins trois fois supérieure, à une capacité de référence du ou des éléments piézoélectriques, telle que la capacité du condensateur Cp dans l'exemple de la figure 1, chaque élément piézoélectrique étant modélisé sous forme d'un condensateur et d'une branche résonante connectée en parallèle du condensateur, la capacité de référence étant la capacité dudit condensateur.

Dans l'exemple de la figure 1, le premier interrupteur K1 est connecté entre une borne positive d'entrée et la première électrode 26 du résonateur 15, le deuxième interrupteur K2 est connecté entre les première 26 et deuxième 27 électrodes du résonateur piézoélectrique 15, et le troisième interrupteur K3 est connecté entre la première électrode 26 du résonateur 15 et une borne positive de sortie et le résonateur 15. Par borne positive, l'homme du métier comprendra qu'il s'agit de la borne de polarité positive, c'est-à-dire qui est au potentiel le plus élevé de la tension d'entrée $V_{in}$, respectivement de la tension de sortie $V_{out}$. Dans l'exemple de la figure 1, les bornes négatives d'entrée et de sortie sont connectées à une masse électrique GND.

La branche résonante 25 est typiquement une branche RLC formée d'un condensateur auxiliaire, d'une résistance et d'une inductance connectés en série (non représentés). La tension $V_p$ aux bornes du résonateur piézoélectrique 15 correspond alors typiquement à la tension aux bornes du condensateur Cp.

La capacité du condensateur auxiliaire est avantageusement supérieure à la capacité du condensateur Cp, notamment au moins trois fois supérieure.

Dans l'exemple de la figure 2, le résonateur 12 est le résonateur LLC 18, et le convertisseur 10 forme alors un convertisseur résonnant LLC. Les interrupteurs 14 sont notés S1, S2, S3, S4.

Le convertisseur résonant LLC comporte un circuit de commutation 30, un résonateur LLC 18 et un redresseur 32.

Le circuit de commutation 30 est, par exemple, en forme d'un pont complet, également appelé pont en H, comme visible sur la figure 2, ou d'un demi-pont (non-représenté). Le circuit de commutation 30 reçoit en entrée la tension $V_{in}$.

Le circuit de commutation 30, dans sa forme de pont en H, comprend par exemple quatre transistors 34 formant les interrupteurs 14, notés aussi S1, S2, S3, S4. Les transistors 34 sont par exemple des transistors MOSFET, tels que des transistors MOSFET de type N.

Le résonateur LLC 18 est connecté en sortie du circuit de commutation 30, et est apte à recevoir en entrée un signal de tension $V_{cm}$. Le résonateur LLC 18 comprend deux inductances L et un condensateur C connectés selon un agencement connu pour former le résonateur LLC. Avantageusement, le résonateur LLC 18 comprend en outre un transformateur 36, connecté en sortie de l'agencement LLC et apte à délivrer une tension $V_{tr}$. L'homme du métier observera que l'inductance L parallèle à l'entrée du transformateur est tout ou partie formée par l'inductance magnétisante du transformateur et l'inductance L en série est formée par tout ou partie de l'inductance de fuite du transformateur. L'homme du métier observera également que les deux inductances L ne sont pas nécessairement identiques et de même valeur.

Le redresseur 32 est connecté en sortie du résonateur LLC 18, et alors apte à recevoir en entrée la tension $V_{tr}$. Le redresseur 32 est configuré pour redresser une tension alternative en la tension continue $V_{out}$ en sortie. Dans l'exemple de la figure 2, le redresseur 32 est en forme d'un pont de diodes 38, tel qu'un pont à quatre diodes 38.

Le dispositif de pilotage 20 est configuré pour piloter le convertisseur d'énergie électrique 10, et en particulier la commutation des interrupteurs 14 du convertisseur d'énergie.

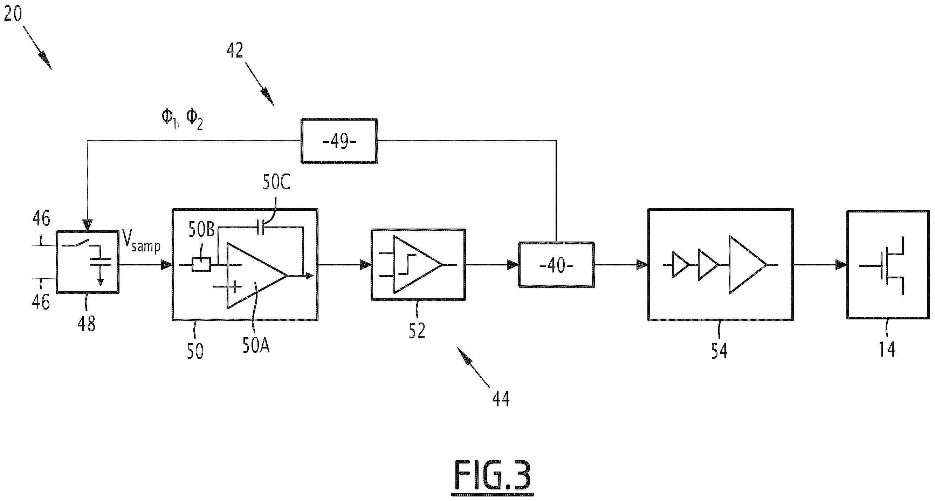

Dans l'exemple de la figure 3, le dispositif de pilotage 20 comprend un module de synchronisation 40, une chaîne de mesure 42 et une chaîne de commande 44 pour un interrupteur 14 respectif.

Avantageusement, le dispositif de pilotage 20 comprend un module de synchronisation 40, une chaîne de mesure 42 et une chaîne de commande 44 pour chacun des interrupteurs 14 respectifs. Autrement dit, dans l'exemple de la figure 1 où le convertisseur d'énergie 10 comporte trois interrupteurs 14, le dispositif de pilotage 20 comprend alors avantageusement trois ensembles de pilotage, à savoir un ensemble de pilotage pour chaque interrupteur 14 respectif, chaque ensemble de pilotage comportant un module de synchronisation 40, une chaîne de mesure 42 et une chaîne de commande 44 respectifs.

Plus généralement, le dispositif de pilotage 20 comprend plusieurs ensembles de pilotage, et le nombre d'ensembles de pilotage est égal au nombre des interrupteurs 14 dont la commutation est pilotée par le dispositif de pilotage 20. Le nombre de modules de synchronisation 40, le nombre de chaînes de mesure 42 et le nombre de chaînes de commande 44 sont alors chacun égal au nombre d'interrupteurs 14 pilotés par le dispositif de pilotage 20.

Le module de synchronisation 40, la chaîne de mesure 42 et la chaîne de commande 44 sont par exemple réalisés chacun sous forme d'un circuit électronique comportant un ou plusieurs composants électroniques, et notamment des comparateurs lorsque des comparaisons sont effectuées.

En variante, le module de synchronisation 40, la chaîne de mesure 42, et la chaîne de commande 44 sont chacun réalisés sous forme d'un composant logique programmable, tel qu'un FPGA (de l'anglais *Field Programmable Gate Array*), ou sous forme d'un circuit intégré, tel qu'un ASIC (de l'anglais *Application Spécifie Integrated Circuit*) ou encore sous forme d'un calculateur, tel qu'un microcontrôleur, un processeur. En variante encore, le module de synchronisation 40, la chaîne de mesure 42 et la chaîne de commande 44 sont implémentés ensemble au sein d'un unique composant matériel, tel qu'un unique composant logique programmable, un unique circuit intégré, ou unique calculateur.

Avantageusement, le module de synchronisation 40, la chaîne de mesure 42, et la chaîne de commande 44 sont chacun réalisés en utilisant la même technologie.

Avantageusement, le module de synchronisation 40, la chaîne de mesure 42, et la chaîne de commande 44 sont chacun réalisés sur un même substrat, par exemple sur le même substrat en silicium.

Le module de synchronisation 40 est configuré pour envoyer simultanément un ordre de mesure d'une grandeur de régulation à la chaîne de mesure 42 et un ordre de commande d'un interrupteur 14 à la chaîne de commande 44, l'ordre de commande étant plus précisément envoyé à une unité 54 de pilotage d'un interrupteur 14 respectif, l'unité de pilotage 54 étant incluse dans la chaîne de commande 44.

La chaîne de mesure 42 est configurée pour, en cas de réception d'un ordre de mesure provenant du module de synchronisation 40, effectuer la mesure d'une grandeur de régulation du convertisseur 10.

La grandeur de régulation est par exemple choisie parmi le groupe consistant en : la tension $V_p$, $V_{cm}$ aux bornes du résonateur 12 ; la tension entre l'une des bornes du résonateur 12 et un potentiel de référence, telle qu'une masse électrique GND ; la tension aux bornes dudit interrupteur 14 respectif ; et la tension entre l'une des bornes dudit interrupteur 14 respectif et un potentiel de référence, telle que la masse électrique GND.

La chaîne de commande 44 est configurée pour, en cas de réception d'un ordre de commande provenant du module de synchronisation 40, commander une commutation de chacun des interrupteurs 14 afin d'alterner des phases à tension sensiblement constante et des phases à charge sensiblement constante aux bornes dudit résonateur 12.

Une première durée $D_1$ de mise en oeuvre de l'ordre de mesure par la chaîne de mesure 42 est inférieure à une deuxième durée $D_2$ de mise en oeuvre de l'ordre de commande par la chaîne de commande 44.

La différence entre la première durée $D_1$ et la deuxième durée $D_2$ est caractérisée par la différence entre les temps de propagation au sein des éléments électriques ou électroniques de la chaîne de mesure 42 et de la chaîne de commande 44.

Par exemple, la première durée $D_1$ est comprise entre 2 et 100 ns ; et la deuxième durée $D_2$ est comprise entre 1 et 99 ns. La différence $(D_1 - D_2)$ entre la première durée $D_1$ et la deuxième durée $D_2$ est typiquement inférieure à 20ns, et avantageusement inférieure à 5ns.

La grandeur de régulation est mesurée de préférence juste avant la commutation de l'interrupteur 14 respectif. Par exemple, la grandeur de régulation est mesurée sensiblement 1 ns avec la commutation de l'interrupteur 14 respectif.

Le chaîne de mesure 42 comprend deux sondes de mesure 46, telles que des sondes Kelvin, chacune étant présente en une borne respective du résonateur 12 et un module d'échantillonnage 48 et une unité 49 de commande du module d'échantillonnage 48, visibles sur la figure 3.

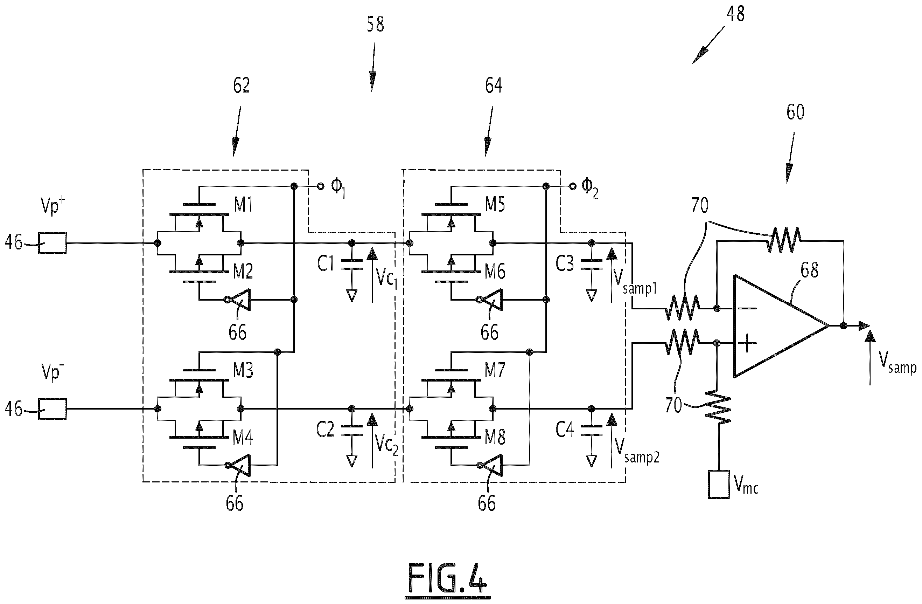

Les sondes de mesure 46 sont configurées pour mesurer un potentiel $V_p^+$ en une première borne du résonateur 12, telle que la première électrode 26, et un potentiel $V_p^-$ en une deuxième borne du résonateur 12, telle que la deuxième électrode 27, comme représenté sur la figure 4. En variante, les sondes de mesures 46 sont configurées pour mesurer la différence de potentiel aux bornes d'un des interrupteurs.

Le module d'échantillonnage 48 est connecté en sortie des deux sondes de mesure 46, et est alors apte à recevoir en entrée les potentiels $V_p^+$ et $V_p^-$.

Le module d'échantillonnage 48 est apte à délivrer une tension $V_{samp}$, $V_{samp}$ correspondant à la tension entre les potentiels $V_p^+$ et $V_p^-$, c'est-à-dire à une soustraction entre les valeurs échantillonnées des potentiels $V_p^+$ et $V_p^-$.

Dans l'exemple de la figure 3, la chaîne de commande 44 comprend un correcteur 50, un générateur 52 d'un signal de commande et une unité 54 de pilotage d'un interrupteur 14 respectif.

Le dispositif de pilotage 20 comprend avantageusement une chaîne de commande 44 telle que visible sur la figure 3 pour chaque interrupteur 14 du convertisseur 10.

Le correcteur 50 est typiquement configuré pour effectuer une régulation de la commande de commutation d'un interrupteur 14 respectif, en recevant en entrée la tension $V_{samp}$ issue du module d'échantillonnage 48, en calculant une erreur $\varepsilon$ entre cette tension $V_{samp}$ et une tension cible, et en effectuant ensuite une intégration de cette erreur $\varepsilon$.

Le correcteur 50 comprend par exemple un amplificateur opérationnel 50A, une résistance 50B et une boucle de rétroaction avec un condensateur 50C. La boucle de rétroaction relie la sortie de l'amplificateur opérationnel 50A à son entrée négative. La résistance électrique 40B est connectée entre l'entrée du correcteur 50 recevant la tension $V_{samp}$ et l'entrée négative de l'amplificateur opérationnel 50A. Il s'agit d'un correcteur de type intégrateur, mais bien entendu d'autres types de correcteurs peuvent être utilisés, par exemple proportionnel intégrale, proportionnel-intégrale-dérivée.

Le générateur 52 de signal de commande est connecté en sortie du correcteur 50, et est configuré pour générer des signaux de commande de l'interrupteur 14, à savoir un signal périodique de commande en ouverture de l'interrupteur 14, et respectivement un signal périodique de commande en fermeture de l'interrupteur 14, ceci en fonction du signal en sortie du correcteur 50.

L'unité de pilotage 54 est connectée en sortie du générateur 52 via le module de synchronisation 40, et alors apte à recevoir en entrée le signal de commande en ouverture, ou respectivement en fermeture, issu du générateur 52.

L'unité de pilotage 54 est connectée en entrée de l'interrupteur 14 dont le dispositif de pilotage 20 est ici décrit, et est configurée pour appliquer le signal de commande en ouverture, ou respectivement en fermeture, à une électrode de commande de l'interrupteur 14, telle qu'une électrode de grille lorsque l'interrupteur 14 comporte un transistor tel qu'un MOSFET ou un IGBT.

Avantageusement, l'unité de commande 49 est configurée pour ajuster plus finement l'écart temporel entre un instant d'échantillonnage $t_{sa}$ et un instant de commutation $t_{com}$ qui est postérieur à l'instant d'échantillonnage $t_{sa}$, en ajoutant une durée de temporisation $D_{temp}$ à la première durée $D_1$ de mise en oeuvre de l'ordre de mesure par la chaîne de mesure 42.

Selon ce complément, l'instant d'échantillonnage $t_{sa}$ vérifie alors l'équation suivante :

[1]

$$t_{sa} = t_0 + D_1 + D_{temp}$$

où $t_{sa}$ représente l'instant d'échantillonnage,
$t_0$ représente un instant de synchronisation entre l'ordre de mesure et l'ordre de commande, c'est-à-dire l'instant auquel le module de synchronisation 40 est configuré pour envoyer simultanément l'ordre de mesure et l'ordre de commande,
$D_1$ représente la première durée de mise en oeuvre de l'ordre de mesure par la chaîne de mesure 42, et
$D_{temp}$ représente la durée de temporisation.

L'instant de commutation $t_{com}$ vérifie typiquement l'équation suivante :

[2]

$$t_{com} = t_0 + D_2$$

où $t_{com}$ représente l'instant de commutation,
$t_0$ représente l'instant de synchronisation, et
$D_2$ représente la deuxième durée de mise en oeuvre de l'ordre de commande par la chaîne de commande 44.

La durée de temporisation $D_{temp}$ est de préférence prédéfinie, par exemple grâce à une simulation préalable de la chaîne de mesure 42 d'une part, et de l'unité de pilotage 54 et de l'interrupteur 14 d'autre part ; et en particulier grâce à une simulation préalable de la première durée $D_1$ de mise en oeuvre de l'ordre de mesure par la chaîne de mesure 42 d'une part, et de la deuxième durée $D_2$ de mise en oeuvre de l'ordre de commande par la chaîne de commande 44 d'autre part. L'homme du métier observera que le correcteur 50 et le générateur 52 de signal de commande n'ont pas d'impact sur la deuxième durée $D_2$.

La durée de temporisation $D_{temp}$ vérifie alors typiquement l'équation suivante :

[3]

$$D_{temp} = D_2 - D_1 - \Delta$$

où $D_{temp}$ représente la durée de temporisation,
$D_1$ représente la première durée,

$D_2$ représente la deuxième durée, et

$\Delta$ représente un écart temporel cible, c'est-à-dire un écart temporel souhaité, entre l'instant d'échantillonnage $t_{sa}$ et l'instant de commutation $t_{com}$.

L'écart temporel cible $\Delta$ est par exemple compris entre 1 et 20ns, par exemple sensiblement égal à 2 ns.

L'unité de commande 49 est connectée en sortie du module de synchronisation 40, et est apte à délivrer deux signaux d'échantillonnages $\phi_1$ et $\phi_2$, à savoir un premier signal d'échantillonnage $\phi_1$ et un deuxième signal d'échantillonnage $\phi_2$, au module d'échantillonnage 48, ces premier et deuxième signaux d'échantillonnage $\phi_1$, $\phi_2$, étant des signaux de commande d'étages d'échantillonnage 62, 64, comme décrit ci-après plus en détail.

Comme visible sur la figure 4, le module d'échantillonnage 48 comprend une unité d'échantillonnage 58 et une unité différentielle 60.

L'unité d'échantillonnage 58 est connecté aux deux sondes de mesure 46 et à l'unité de commande 49, et alors apte à recevoir en entrée les tensions $V_p^+$ et $V_p^-$, ainsi que les signaux d'échantillonnages $\phi_1$ et $\phi_2$.

L'unité d'échantillonnage 58 comprend un premier étage d'échantillonnage 62 et un deuxième étage d'échantillonnage 64.

Le premier étage d'échantillonnage 62 est connecté aux deux sondes de mesure 46 pour recevoir en entrée les tensions $V_p^+$ et $V_p^-$, et à l'unité de commande 49 pour recevoir le premier signal d'échantillonnage $\phi_1$ formant un signal de commande du premier étage d'échantillonnage 62.

Le premier étage d'échantillonnage 62 est configuré pour échantillonner les tensions $V_p^+$ et $V_p^-$ sur une durée très courte, par exemple sur une durée d'une nanoseconde.

Le premier étage d'échantillonnage 62 comprend par exemple quatre transistors M1, M2, M3 et M4, deux portes logiques d'inversion 66 et deux condensateurs C1 et C2.

Les transistors M1 et M2 sont connectés en entrée à une première sonde de mesure 46, et aptes à recevoir en entrée la tension $V_p^+$.

Le premier signal d'échantillonnage $\phi_1$ est appliqué directement à l'électrode de commande du transistor M1, et est appliqué à l'électrode de commande du transistor M2 par l'intermédiaire de la porte logique d'inversion 66.

Les transistors M1 et M2 sont connectés au condensateur C1 par leurs premières électrodes de conduction. Les transistors M1 et M2 sont configurés pour, lorsqu'ils sont en position fermée, autoriser la charge du condensateur C1.

Les transistors M3 et M4 sont connectés en entrée à une deuxième sonde de mesure 46, et aptes à recevoir en entrée la tension $V_p^-$.

Le premier signal d'échantillonnage $\phi_1$ est appliqué directement à l'électrode de commande du transistor M3, et est appliqué à l'électrode de commande du transistor M4 par l'intermédiaire de la porte logique d'inversion 66.

Les transistors M3 et M4 sont connectés au condensateur C2 par leurs premières électrodes de conduction. Les transistors M3 et M4 sont configurés pour, lorsqu'ils sont en position fermée, autoriser la charge du condensateur C2.

Dans l'exemple de la figure 4, les transistors M1 et M3 sont des transistors à effet de champ de grille isolée (plus couramment nommé MOSFET) de type N ; les transistors M2 et M4 sont des transistors à effet de champ de grille isolée (plus couramment nommé MOSFET) de type P, ce qui explique l'utilisation des portes logiques inversion 66 pour la commande des transistors M2 et M4.

Le premier étage de d'échantillonnage 58 est apte à délivrer une tension $V_{C1}$ aux bornes du condensateur C1 et une tension $V_{C2}$ aux bornes du condensateurs C2.

Le deuxième étage d'échantillonnage 64 est connecté en sortie du premier étage d'échantillonnage 62, et alors apte à recevoir les tensions $V_{c1}$ et $V_{c2}$.

Le deuxième étage d'échantillonnage 64 est configuré pour échantillonner les tensions en sortie du premier étage d'échantillonnage 62 sur une durée plus longue, par exemple sur une durée de dix nanosecondes.

Le deuxième étage d'échantillonnage 64 comprend par exemple quatre transistors M5, M6, M7 et M8, deux portes logiques d'inversion 66 et deux condensateurs C3 et C4.

Les transistors M5 et M6 sont connectés en entrée au condensateur C1, et alors aptes à recevoir en entrée la tension $V_{c1}$.

Le deuxième signal d'échantillonnage $\phi_2$ est appliqué directement à l'électrode de commande de M5, et est appliqué à l'électrode de commande de M6 par l'intermédiaire de la porte logique d'inversion 66.

Les transistors M5 et M6 sont connectés au condensateur C3 par leurs premières électrodes de conduction. Les transistors M5 et M6 sont configurés pour, lorsqu'ils sont en position fermée, autoriser la charge du condensateur C3.

Les transistors M7 et M8 sont connectés en entrée au condensateur C2, et alors apte à recevoir en entrée la tension $V_{C2}$.

Le deuxième signal d'échantillonnage $\phi_2$ est appliqué directement à l'électrode de commande de M7, et est appliqué à l'électrode de commande de M8 par l'intermédiaire de la porte logique d'inversion 66.

Les transistors M7 et M8 sont connectés au condensateur C4 par leurs premières électrodes de conduction. Les transistors M7 et M8 sont configurés pour, lorsqu'ils sont en position fermée, autoriser la charge du condensateur C4.

Le deuxième étage de d'échantillonnage 64 est apte à délivrer une tension $V_{samp1}$ aux bornes du condensateur C3 et une tension $V_{samp2}$ aux bornes du condensateurs C4.

Dans l'exemple figure 4, les transistors M5 et M7 sont des transistors à effet de champ de grille isolée (plus couramment nommé MOSFET) de type N ; les transistors M6 et M8 sont des transistors à effet de champ de grille isolée (plus couramment nommé MOSFET) de type P, ce qui explique l'utilisation des portes logiques inversion 66 pour la commande des transistors M6 et M8.

Le ratio entre le signal d'échantillonnage $\phi_1$ et le signal d'échantillonnage $\phi_2$ est de préférence supérieur à 10, de préférence encore supérieure à 15, et préférentiellement encore sensiblement égal à 20.

L'unité différentielle 60 est connectée en sortie du deuxième étage d'échantillonnage 64 et alors apte à recevoir en entrée les tensions $V_{samp1}$ et $V_{samp2}$.

L'unité différentielle 60 est destinée à délivrer une tension $V_{samp}$ résultant de la différence entre les tensions $V_{samp1}$ et $V_{samp2}$.

L'unité différentielle 60 comporte par exemple un amplificateur opérationnel 68, trois résistances électriques 70 et une boucle de rétroaction avec une autre résistance électrique 70. La boucle de rétroaction relie la sortie de l'amplificateur opérationnel 68 à son entrée négative. Une première des trois résistances 70 est connectée entre la tension $V_{samp1}$ et l'entrée négative de l'amplificateur opérationnel. Une deuxième des trois résistances 70 est connectée entre la tension $V_{samp2}$ et l'entrée positive de l'amplificateur opérationnel 68. Une troisième des trois résistances 70 est connectée entre le potentiel $V_{mc}$ du circuit et l'entrée positive de l'amplificateur opérationnel 68.

Avantageusement, les valeurs des résistances 70 sont toutes sensiblement égales de sorte que $V_{samp}$ soit égale à $V_{samp1}$ - $V_{samp2}$.

Le premier signal d'échantillonnage $\phi_1$, par exemple d'une durée sensiblement égale à 1 ns, active alors quatre transistors M1, M2, M3 et M4, chargeant les deux condensateurs C1 et C2 d'échantillonnage avec les valeurs des tensions $V_p^+$ et $V_p^-$. Indépendamment de l'erreur mesurée, l'échantillonnage est toujours réalisé avant la commutation de l'interrupteur 14 correspondant. Par exemple, le premier signal d'échantillonnage $\phi_1$ est généré par l'unité de commande 49 quelques nanosecondes (> 2 ns) avant la commutation de l'interrupteur 14 correspondant, c'est-à-dire quelques nanosecondes, par exemple sensiblement 2 ns, avant l'instant de commutation $t_{com}$.

Le deuxième signal d'échantillonnage $\phi_2$ est retardé par rapport au premier signal d'échantillonnage $\phi_1$, par exemple d'environ 20 ns, et possède une durée active plus longue que le premier signal d'échantillonnage $\phi_1$, par exemple d'une durée sensiblement égale à 10 ns, avec un temps de montée/descente plus élevé que celui du premier signal d'échantillonnage $\phi_1$, afin de réduire les variations dues à la charge injectée sur les tensions échantillonnées $V_{samp1}$ et $V_{samp2}$. Les signaux échantillonnés sont ensuite soustraits à l'aide l'unité différentielle 60, par exemple de l'amplificateur opérationnel 68 en configuration soustracteur, avec un gain de 1. Ce montage ajoute également un mode commun $V_{mc}$ à la tension $V_{samp}$.

Le premier étage d'échantillonnage 62 doit échantillonner sur une durée très courte (1ns par exemple), ce qui implique des transistors M1 à M4 assez gros pour pouvoir charger les condensateurs C1, C2 sur un temps aussi court. La commande de ces transistors M1 à M4 nécessite d'apporter/retirer une grande quantité de charge sur leur électrode de commande. L'injection/retrait de cette grosse charge perturbe le potentiel de source de ces transistors et donc la tension aux bornes des condensateurs C1, C2, à savoir une première perturbation dans un sens à la fermeture, puis une deuxième perturbation dans l'autre sens à l'ouverture. Cela serait néfaste pour le deuxième étage d'échantillonnage 64 et l'unité différentielle 60 qui seraient bruités ; toutefois, les première et deuxième perturbations se compensent l'une l'autre (perturbation dans un sens, puis dans l'autre) et la tension aux bornes des condensateurs C1, C2 est stable sur le reste de la période.

Le deuxième étage d'échantillonnage 64 échantillonne alors la tension aux bornes des condensateurs C1, C2 sur une zone temporelle stable de tension. Ce deuxième échantillonnage est beaucoup moins contraint et peut se faire sur une durée beaucoup plus longue, telle que 10ns, ce qui permet d'utiliser des transistors M5 à M8 beaucoup plus petits qui nécessitent beaucoup moins de charges pour être commandés, charges qui perturbent pas ou peu la tension aux bornes des condensateurs C3 et C4. L'unité différentielle 60 en sortie des condensateurs C3 et C4 n'est alors pas ou peu perturbée.

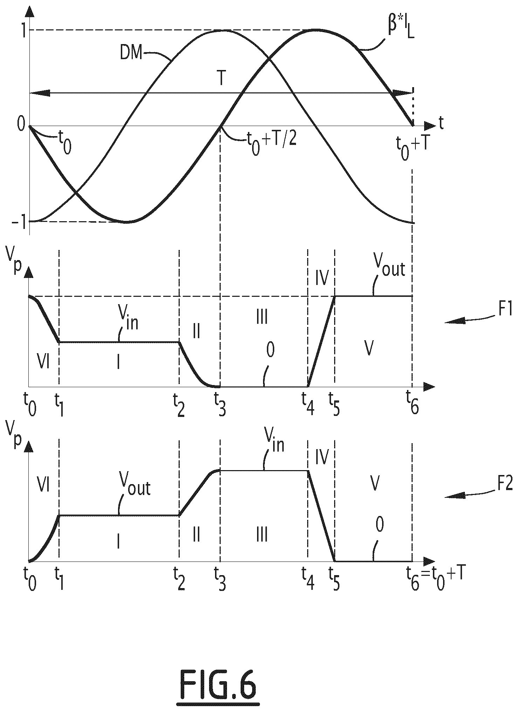

Le fonctionnement nominal d'un cycle du convertisseur 10 comprenant un résonateur piézoélectrique 15 va maintenant être décrit en regard de la figure 6 montrant les phases successives d'un cycle de résonance du résonateur piézoélectrique, selon un format générique correspondant à différents modes de fonctionnement du convertisseur 10, à savoir un premier mode de fonctionnement F1, également appelé mode élévateur de tension ; et un deuxième mode de fonctionnement F2, également appelé mode abaisseur de tension.

La figure 6 représente alors l'évolution du courant $\beta^*I_L$ du courant $I_L$ normalisé en amplitude circulant dans le résonateur piézoélectrique 15 visible sur la figure 1 ; de la tension $V_p$ aux bornes du résonateur piézoélectrique 15 ; et de la déformation mécanique du résonateur piézoélectrique 15, représentée par la courbe DM ; ceci au cours d'un cycle de résonance et pour deux modes de fonctionnement du convertisseur 10, à savoir le premier mode de fonctionnement F1 en élévateur de tension, et le deuxième mode de fonctionnement F2 en abaisseur de tension. Avec $\beta$=-1 en mode de fonctionnement élévateur de tension F1 ; et $\beta$=+1 en mode de fonctionnement abaisseur de tension F2.

Par convention, un premier instant temporel de commutation, noté $t_1$, correspond à la fermeture du premier interrupteur $K_1$ pour le premier mode F1, respectivement du troisième interrupteur $K_3$ pour le deuxième mode F2, et la tension $V_p$ aux bornes du résonateur piézoélectrique 15 est alors sensiblement constante et égale à la tension d'entrée $V_{in}$ selon le premier mode F1, ou à la tension de sortie $V_{out}$ selon le deuxième mode F2. En ce premier instant temporel de commutation $t_1$ commence alors une première phase I durant jusqu'à l'ouverture de l'interrupteur qui a été fermé en le premier instant temporel de commutation $t_1$.

Un deuxième instant temporel de commutation, noté $t_2$, correspond à l'ouverture du premier interrupteur $K_1$ pour le premier mode F1, respectivement du troisième interrupteur $K_3$ pour le deuxième mode F2, et la tension $V_p$ aux bornes du résonateur piézoélectrique 15 passe alors d'une tension précédente $V_{in}$ selon le premier mode F1, ou $V_{out}$ selon le deuxième mode F2, à une position de circuit ouvert. En ce deuxième instant temporel de commutation $t_2$ commence alors une deuxième phase II durant jusqu'à un instant temporel $t_3$ correspondant à un passage à zéro du courant $I_L$ circulant dans le résonateur piézoélectrique 15. Préalablement, l'instant temporel $t_2$ a été défini de sorte qu'en l'instant temporel $t_3$, la tension $V_p$ aux bornes du résonateur piézoélectrique 15 atteigne une valeur correspondant à la valeur permettant une commutation à zéro de tension de l'interrupteur correspondant.

A l'instant temporel $t_3$, commence une troisième phase III, à tension sensiblement constante à la valeur nulle selon le premier mode F1 via la fermeture du deuxième interrupteur K2, ou la tension d'entrée $V_{in}$ selon le deuxième mode F2 via la fermeture du premier interrupteur $K_1$, et dure jusqu'à un instant temporel $t_4$ qui forme un paramètre de réglage du convertisseur 10, cet instant temporel $t_4$ permettant de définir la tension, le courant ou encore la puissance souhaitée en sortie du convertisseur 10.

L'instant temporel $t_4$ correspond alors à la fin de la troisième phase III et à l'instant auquel le deuxième interrupteur $K_2$ selon le premier mode F1, ou respectivement le premier interrupteur $K_1$ selon le deuxième mode F2, doit alors être ouvert, l'instant temporel $t_4$ formant un quatrième instant temporel de commutation correspondant à l'ouverture du deuxième interrupteur $K_2$ selon le premier mode F1, ou respectivement du premier interrupteur $K_1$ selon le deuxième mode F2.

Au quatrième instant temporel de commutation débute une quatrième phase IV correspondant à une phase à charge sensiblement constante, ou encore en circuit sensiblement ouvert, cette quatrième phase IV durant jusqu'à un instant temporel ts défini par le passage à une nouvelle valeur prédéfinie de la tension $V_p$ aux bornes du résonateur piézoélectrique 15. Lorsque le convertisseur 10 comporte trois interrupteurs $K_1$, $K_2$, $K_3$ aptes à être commandés pour alterner des phases à tension sensiblement constante et des phases à charge sensiblement constante aux bornes du résonateur piézoélectrique 15, l'instant temporel ts formant la fin de la quatrième phase IV correspond typiquement à la fermeture du troisième interrupteur $K_3$ selon le premier mode F1, ou respectivement du deuxième interrupteur $K_2$ selon le deuxième mode F2, l'instant temporel ts formant alors un cinquième instant temporel de commutation.

A l'instant temporel ts débute alors une cinquième phase V correspondant à une phase à tension sensiblement constante à la tension de sortie $V_{out}$ selon le premier mode F1 via la fermeture du troisième interrupteur K3, ou à la valeur nulle selon le deuxième mode F2 via la fermeture du deuxième interrupteur K2. Cette cinquième phase V dure jusqu'à un instant temporel $t_0$, ou encore jusqu'à un instant temporel ts modulo la période T du cycle de résonance défini par le passage à zéro du courant $I_L$ circulant dans le résonateur piézoélectrique 15, et selon une monotonie opposée à celle du passage à zéro en l'instant temporel $t_3$. Par convention, l'instant temporel $t_6$ est égal à la somme de l'instant temporel $t_0$ et de la période T du cycle de résonance, et est également noté $(t_0+T)$.

Dans l'exemple de la figure 6, l'instant temporel $t_6$ correspond à la fin d'un cycle de résonance du résonateur piézoélectrique 15, le cycle représenté ayant été défini par rapport aux instants temporels de passage à zéro du courant $I_L$ circulant dans le résonateur piézoélectrique 15, et non par rapport au premier instant temporel de commutation $t_1$.

L'instant temporel $t_0$, ou encore l'instant temporel $t_6$, est obtenu via l'ouverture du troisième interrupteur $K_3$ selon le premier mode F1, ou respectivement du deuxième interrupteur K2 selon le deuxième mode F2, et forme alors un sixième instant temporel de commutation.

A partir du passage par zéro du courant $I_L$ circulant dans le résonateur piézoélectrique 15 débute alors une sixième phase VI correspondant à une phase à charge sensiblement constante, cette sixième phase VI phase s'écoulant entre l'instant temporel $t_6$ et l'instant temporel $t_6+t_1$, ou encore entre l'instant temporel $t_0$ et l'instant temporel $t_1$ dans l'exemple de la figure 6, étant entendu que l'instant temporel $t_6$ correspond à l'instant temporel $t_0$ à un cycle de résonance près. La fin de cette sixième phase VI correspond au moment où la tension $V_p$ aux bornes du résonateur piézoélectrique 15 atteint la tension d'entrée $V_{in}$ selon le premier mode F1, ou à la tension de sortie $V_{out}$ selon le deuxième mode F2.

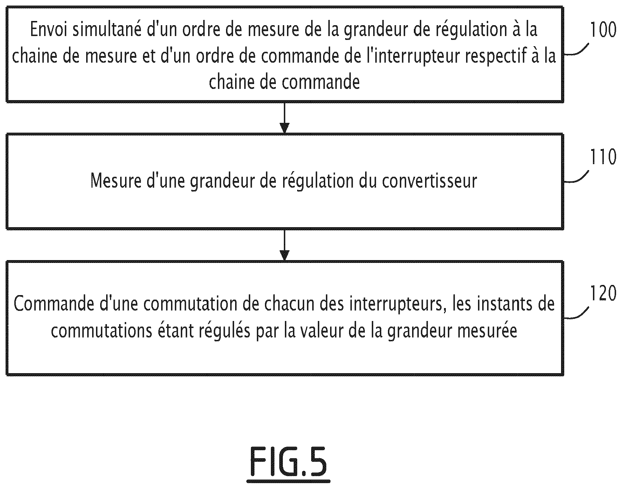

Le procédé de pilotage d'un convertisseur d'énergie électrique 10 via le dispositif de pilotage 20 va maintenant être décrit en regard de l'organigramme de la figure 5, le procédé comprenant trois étapes distinctes.

Le procédé qui va suivre est avantageusement mis en oeuvre avant chaque palier à tension sensiblement constante, c'est-à-dire avant chaque phase à tension sensiblement constante, et pour l'interrupteur 14 respectif associé à ce palier à tension sensiblement constante, comme expliqué précédemment.

Lors de la première étape 100, le module de synchronisation 40 envoie simultanément à la chaîne de mesure 42 un ordre de mesure de la grandeur de régulation et à la chaîne de commande 44 un ordre de commande de l'interrupteur 14 respectif.

Lors de la deuxième étape 110, après réception de l'ordre de mesure provenant du module de synchronisation 40, la chaîne de mesure 42 mesure la grandeur de régulation du convertisseur 10. La mesure de la grandeur de régulation est alors effectuée en l'instant d'échantillonnage $t_{sa}$.

La grandeur de régulation du convertisseur 10 est typiquement choisie parmi le groupe consistant en : la tension aux bornes du résonateur 12 ; la tension entre l'une des bornes du résonateur 12 et un potentiel de référence, telle qu'une masse électrique ; la tension aux bornes dudit interrupteur 14 respectif ; la tension entre l'une des bornes dudit interrupteur 14 respectif et un potentiel de référence, telle qu'une masse électrique.

Lors de la troisième étape 120, après réception de l'ordre de commande provenant du module de synchronisation 40, la chaîne de commande 44 commande de l'interrupteur 14 respectif. La commande de l'interrupteur 14 est alors effective en l'instant de commutation $t_{com}$

Avantageusement, l'unité de commande 49 ajuste plus finement l'écart temporel entre l'instant d'échantillonnage $t_{sa}$ et l'instant de commutation $t_{com}$ postérieur à l'instant d'échantillonnage $t_{sa}$, en ajoutant la durée de temporisation $D_{temp}$ à la première durée $D_1$ de mise en oeuvre de l'ordre de mesure par la chaîne de mesure 42.

L'instant de commutation $t_{com}$ intervient alors juste après l'instant d'échantillonnage $t_{sa}$, l'écart temporel cible $\Delta$, c'est-à-dire l'écart temporel souhaité, entre l'instant d'échantillonnage $t_{sa}$ et l'instant de commutation $t_{com}$ étant avantageusement compris entre 0,5 et 20 ns, par exemple sensiblement égal à 2 ns.

La régulation du convertisseur 10 est alors plus précise, celle-ci étant effectuée lors du palier subséquent à tension sensiblement constante à partir de la valeur de la grandeur de régulation mesurée juste avant le début de ce palier.

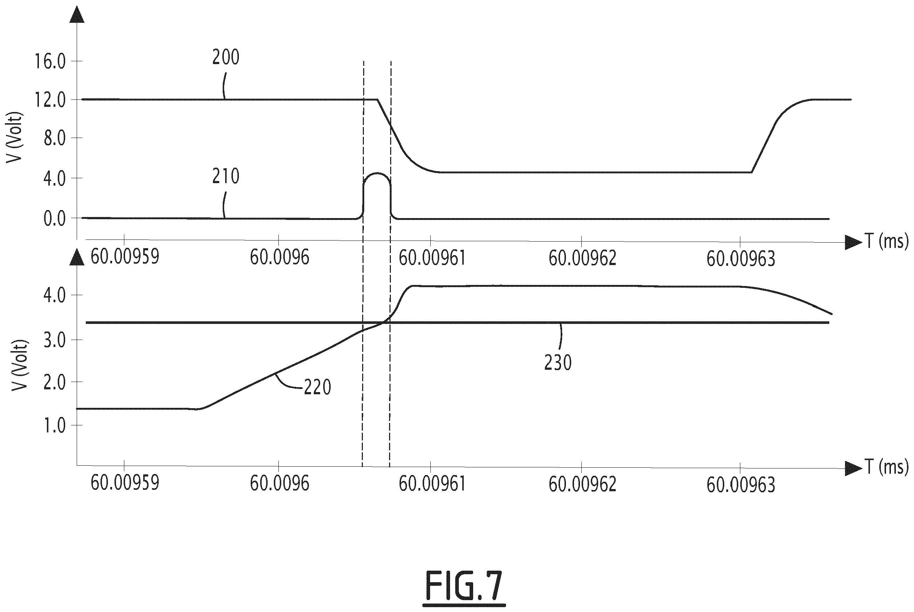

La figure 7 représente une courbe 200 de l'ordre de commande reçu par l'interrupteur 14 respectif (dans l'exemple 12V correspond à un ordre d'ouverture et 5V à un ordre de fermeture), une courbe 210 du signal d'échantillonnage formant l'ordre de mesure de la grandeur de régulation, une courbe 220 de la tension $V_p$ aux bornes du résonateur 12, et une courbe 230 de la valeur mesurée de la grandeur de régulation. Dans l'exemple de la figure 7, la grandeur de régulation est la tension $V_p$ aux bornes du résonateur 12.

L'homme du métier observera alors que l'ordre d'échantillonnage survient immédiatement avant la fermeture de l'interrupteur 14 respectif, la grandeur mesurée visible sur la courbe 230 est alors égale à la valeur de la tension $V_p$ aux bornes du résonateur 12 juste avant la fermeture de l'interrupteur 14 respectif.

On conçoit ainsi que le dispositif électronique de pilotage 20 et le procédé de pilotage selon l'invention permettent une meilleure régulation avec une mesure plus précise de la grandeur de régulation juste avant au moins un instant de fermeture d'un interrupteur 14 respectif, et de préférence avant chaque instant de fermeture d'interrupteur 14. Cette meilleure régulation permet alors un pilotage amélioré du convertisseur d'énergie électrique 10.

Avantageusement, les valeurs de la grandeur de régulation sont mesurées systématiquement et périodiquement avant les instants de fermeture successif des interrupteurs 14, c'est-à-dire avant chaque début de phase à tension sensiblement constante.

**Revendications**

1. Dispositif électronique (20) de pilotage d'un convertisseur d'énergie électrique (10) apte à convertir une tension d'entrée ($V_{in}$) en une tension de sortie ($V_{out}$), le convertisseur (10) comportant deux bornes d'entrée pour recevoir la tension d'entrée ($V_{in}$), deux bornes de sortie pour délivrer la tension de sortie ($V_{out}$), un résonateur (12), et plusieurs interrupteurs (14) connectés au résonateur (12),

   le dispositif électronique de pilotage (20) comprenant :

   - une chaine de mesure (42) configurée pour mesurer une grandeur de régulation du convertisseur (10) ;
   - une chaine de commande (44) configurée pour commander une commutation de chacun des interrupteurs (14), pour alterner des phases à tension sensiblement constante aux bornes du résonateur (12) et des phases à charge sensiblement constante aux bornes dudit résonateur (12),

   la chaine de commande (44) comportant une boucle de régulation configurée pour réguler, à partir de la grandeur de régulation mesurée, un instant de commutation d'un interrupteur (14) respectif ;
   **caractérisé en ce qu'**il comprend en outre :

   - un module de synchronisation (40) configuré pour envoyer simultanément un ordre de mesure de la grandeur de régulation à la chaine de mesure (42) et un ordre de commande de l'interrupteur (14) respectif à la chaine de commande (44), et

**en ce que** la durée de mise en oeuvre de l'ordre de mesure par la chaine de mesure (42) est inférieure à la durée de mise en oeuvre de l'ordre de commande par la chaine de commande (44), de sorte que la grandeur de régulation est mesurée avant la commutation de l'interrupteur (14) respectif.

2. Dispositif (20) selon la revendication 1, dans lequel l'interrupteur (14) respectif est choisi parmi le groupe comportant :

- l'un des interrupteurs (14), dit premier interrupteur (K1), connecté entre l'une des bornes d'entrée et le résonateur (12), le premier interrupteur (K1) étant commutable entre une position ouverte et une position fermée dans laquelle la tension d'entrée ($V_{in}$) est appliquée aux bornes du résonateur (12);
- l'un des interrupteurs (14), dit deuxième interrupteur (K2), connecté entre l'une des bornes d'entrée et le résonateur (12), le deuxième interrupteur (K2) étant commutable entre une position ouverte et une position fermée dans laquelle la tension est nulle aux bornes du résonateur (12) ;
- l'un des interrupteurs (14), dit troisième interrupteur (K3), connecté entre l'une des bornes de sortie et le résonateur (12), le troisième interrupteur (K3) étant commutable entre une position ouverte et une position fermée dans laquelle une énergie du résonateur (12) est restituée à la tension de sortie ($V_{out}$).

3. Dispositif (20) selon la revendication 1 ou 2, dans lequel la grandeur de régulation est choisie parmi le groupe consistant en : la tension ($V_p$) aux bornes du résonateur (12) ; la tension entre l'une des bornes du résonateur (12) et un potentiel de référence, telle qu'une masse électrique (GND) ; la tension aux bornes dudit interrupteur (14) respectif ; et la tension entre l'une des bornes dudit interrupteur (14) respectif et un potentiel de référence, telle qu'une masse électrique (GND).

4. Dispositif (20) selon la revendication 3, dans lequel la chaine de mesure (42) comprend deux sondes de mesure (46) adaptées pour mesurer les deux potentiels d'extrémité de la tension formant la grandeur de régulation, chaque sonde de mesure (46) étant adaptée pour mesurer un potentiel respectif en une extrémité respective de ladite tension ; la tension ($V_{samp}$) formant la grandeur de régulation étant de préférence ensuite obtenue par différence entre les deux potentiels d'extrémité mesurés respectivement par les deux sondes de mesure (46).

5. Dispositif (20) selon la revendication 4, dans lequel la chaine de mesure (42) comprend un module d'échantillonnage (48) connecté aux deux sondes de mesure (46) ; le module d'échantillonnage (48) comportant un premier étage (62) connecté aux deux sondes de mesure (46), un deuxième étage (64) connecté en sortie du premier étage (62) et une unité différentielle (60) connectée en sortie du deuxième étage (64) ; le premier étage (62) étant configuré pour générer une première impulsion d'échantillonnage, et le deuxième étage étant configuré pour générer une deuxième impulsion d'échantillonnage après la première impulsion d'échantillonnage ; la deuxième impulsion d'échantillonnage ayant une durée plus longue que la première impulsion d'échantillonnage ;

un ratio entre la durée de la deuxième impulsion d'échantillonnage et celle de la première impulsion d'échantillonnage étant de préférence supérieur à 10, de préférence encore supérieur à 15, et préférentiellement encore sensiblement égal à 20 ;
le premier étage (62) incluant de préférence encore une paire de premiers condensateurs d'échantillonnage (C1, C2) et une paire de premiers commutateurs (M1-M2, M3-M4), chaque premier commutateur (M1-M2, M3-M4) étant connecté entre une sonde de mesure (46) et un premier condensateur (C1, C2) respectifs et configuré, lorsqu'il est commuté en position fermée, pour autoriser la charge du premier condensateur (C1, C2) respectif ;
le deuxième étage (64) incluant de préférence encore une paire de deuxièmes condensateurs d'échantillonnage (C3, C4) et une paire de deuxièmes commutateurs (M5-M6, M7-M8), chaque deuxième commutateur (M5-M6, M7-M8) étant connecté à un deuxième condensateur (C3, C4) respectif et configuré, lorsqu'il est commuté en position fermée, pour autoriser la charge du deuxième condensateur (C3, C4) respectif.

6. Dispositif (20) selon l'une quelconque des revendications précédentes, dans lequel lorsque le convertisseur (10) fonctionne à une fréquence de fonctionnement supérieure à 1 MHz, la grandeur de régulation est mesurée entre 0,5 ns et 20 ns, avantageusement sensiblement 1 ns, avant la commutation de l'interrupteur (14) respectif.

7. Dispositif (20) selon l'une quelconque des revendications 1 à 6, dans lequel le résonateur (12) est un résonateur piézoélectrique (15) ;

le résonateur piézoélectrique (15) étant de préférence constitué selon l'une des constitutions parmi le groupe consistant en : un unique élément piézoélectrique ; plusieurs éléments piézoélectriques connectés en série ; plusieurs éléments piézoélectriques connectés en parallèle ; un élément piézoélectrique et un condensateur auxiliaire connectés en série ; un élément piézoélectrique et un condensateur auxiliaire connectés en parallèle ; et un agencement de plusieurs branches parallèles, chaque branche comportant un ou plusieurs éléments piézoélectriques connectés en série ou un condensateur auxiliaire ;

le condensateur auxiliaire étant de préférence encore de capacité supérieure, de préférence encore au moins trois fois supérieure, à une capacité de référence du ou des éléments piézoélectriques, chaque élément piézoélectrique étant modélisé sous forme d'un condensateur et d'une branche résonante connectée en parallèle du condensateur, la capacité de référence étant la capacité dudit condensateur.

8. Dispositif (20) selon l'une quelconque des revendications 1 à 6, dans lequel le résonateur (12) est un résonateur LC (18) comportant une inductance (L) et un condensateur (C) connecté en série de l'inductance (L).

9. Dispositif (20) selon l'une quelconque des revendications précédentes, dans lequel l'envoi simultané d'un ordre de mesure de la grandeur de régulation à la chaine de mesure (42) et d'un ordre de commande de l'interrupteur (14) respectif à la chaine de commande (44) est effectué pour plusieurs commandes d'interrupteur (14) au cours d'un même cycle de résonance du résonateur (12) ; la durée de mise en oeuvre de l'ordre de mesure par la chaine de mesure (42) étant inférieure à la durée de mise en oeuvre de l'ordre de commande par la chaine de commande (44), de sorte que la grandeur de régulation est mesurée avant la commutation de l'interrupteur (14) respectif, pour ces plusieurs commandes d'interrupteur (14) au cours du même cycle de résonance ;

ces plusieurs commandes d'interrupteur (14) au cours du même cycle de résonance étant de préférence des fermetures d'interrupteur (14) formant des débuts de phases à tension sensiblement constante aux bornes du résonateur (12).

10. Dispositif (20) selon la revendication 9, dans lequel le dispositif de pilotage (20) comprend plusieurs ensembles de pilotage, et le nombre d'ensembles de pilotage est égal au nombre d'interrupteurs (14) dont la commutation est pilotée par le dispositif de pilotage (20), chaque ensemble de pilotage comportant un module de synchronisation (40), une chaîne de mesure (42) et une chaîne de commande (44) respectifs.

11. Système de conversion d'énergie électrique (5) comprenant :

- un convertisseur d'énergie électrique (10) apte à convertir une tension d'entrée ($V_{in}$) en une tension de sortie ($V_{out}$), le convertisseur (10) comportant deux bornes d'entrée pour recevoir la tension d'entrée ($V_{in}$), deux bornes de sortie pour délivrer la tension de sortie ($V_{out}$), un résonateur (12), et plusieurs interrupteurs (14) connectés au résonateur (12) ; et
- un dispositif électronique (20) de pilotage du convertisseur d'énergie électrique (10) ;

**caractérisé en ce que** le dispositif de pilotage (20) est selon l'une quelconque des revendications précédentes.

12. Procédé de pilotage d'un convertisseur d'énergie électrique (10) apte à convertir une tension d'entrée ($V_{in}$) en une tension de sortie ($V_{out}$), le convertisseur (10) comportant deux bornes d'entrée pour recevoir la tension d'entrée ($V_{in}$), deux bornes de sortie pour délivrer la tension de sortie ($V_{out}$), un résonateur (12), et plusieurs interrupteurs (14) connectés au résonateur (12),

le procédé étant mis en oeuvre par un dispositif électronique de pilotage (20) et comprenant les étapes suivantes :

- mesure (110), via une chaine de mesure (42), d'une grandeur de régulation du convertisseur (10) ;
- commande (120), via une chaine de commande (44), d'une commutation de chacun des interrupteurs (14), pour alterner des phases à tension sensiblement constante aux bornes du résonateur (12) et des phases à charge sensiblement constante aux bornes dudit résonateur (12),

la chaine de commande (44) comportant une boucle de régulation configurée pour réguler, à partir de la grandeur de régulation mesurée, un instant de commutation d'un interrupteur (14) respectif ;
**caractérisé en ce qu'**il comprend en outre, avant les étapes de mesure et de commande :

- une étape de synchronisation (100) comportant l'envoi simultané d'un ordre de mesure de la grandeur de régulation à la chaine de mesure (42) et d'un ordre de commande de l'interrupteur (14) respectif à la chaine de commande (44), et

**en ce que** la durée de mise en oeuvre de l'ordre de mesure par la chaine de mesure (42) est inférieure à la durée de mise en oeuvre de l'ordre de commande par la chaine de commande (44), de sorte que la grandeur de régulation est mesurée avant la commutation de l'interrupteur (14) respectif.

FIG.1

**FIG.2**

FIG.3

FIG.4

EP 4 576 530 A1

Envoi simultané d'un ordre de mesure de la grandeur de régulation à la chaine de mesure et d'un ordre de commande de l'interrupteur respectif à la chaine de commande      100

Mesure d'une grandeur de régulation du convertisseur      110

Commande d'une commutation de chacun des interrupteurs, les instants de commutations étant régulés par la valeur de la grandeur mesurée      120

FIG.5

FIG.6

FIG.7

Europäisches
Patentamt

European
Patent Office

Office européen
des brevets

# RAPPORT DE RECHERCHE EUROPEENNE

**Numéro de la demande**

EP 24 22 1230

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | TOUHAMI MUSTAPHA ET AL: "Implementation of Control Strategy for Step-down DC-DC Converter Based on Piezoelectric Resonator", 2020 22ND EUROPEAN CONFERENCE ON POWER ELECTRONICS AND APPLICATIONS (EPE'20 ECCE EUROPE), EPE ASSOCIATION, 7 septembre 2020 (2020-09-07), pages 1-9, XP033835472, DOI: 10.23919/EPE20ECCEEUROPE43536.2020.9215910 | 1-4,12 | INV. H02M1/00 H02M3/00 H02M3/335 |
| A | * le document en entier * ----- | 5-11 | |

**DOMAINES TECHNIQUES RECHERCHES (IPC)**

H02M

Le présent rapport a été établi pour toutes les revendications

| Lieu de la recherche | Date d'achèvement de la recherche | Examinateur |
|---|---|---|
| Munich | 8 avril 2025 | Fraïssé, Stéphane |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...........................................................................................

& : membre de la même famille, document correspondant

EPO FORM 1503 03.82 (P04C02)

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3086471 A1

- FR 3086472 A1

**Littérature non-brevet citée dans la description**

- **J. J. PIEL** ; **J. D. BOLES** ; **J. H. LANG** ; **D. J. PERREAULT**. Feedback Control for a Piezoelectric-Resonator-Based DC-DC Power Converter. *IEEE 22nd Workshop on Control and Modelling of Power Electronics (COMPEL)*, 2021
- **B. POLLET** ; **G. DESPESSE** ; **F. COSTA**. A New Non-isolated Low-Power Inductorless Piezoelectric DC-DC Converter. *IEEE Transactions on Power Electronics*, vol. 34 (11)

- **M. TOUHAMI** ; **G. DESPESSE** ; **F. COSTA** ; **B. POLLET**. Implementation of Control Strategy for Step-down DC-DC Converter Based on Piezoelectric Resonator. *22nd European Conférence on Power Electronics and Applications (EPE'20 ECCE Europe)*, 2020
- **E. A. STOLT** ; **W. D. BRAUN** ; **J. M. RIVAS-DAVILA**. Forward-Zero Cycle Closed-Loop Control of Piezoelectric Resonator DC-DC Converters. *IEEE 23rd Workshop on Control and Modeling for Power Electronics (COMPEL)*, 2022